Europäisches Patentamt

European Patent Office

Office européen des brevets

(19)

(11) Numéro de publication : **0 165 370**
**B1**

(12) **FASCICULE DE BREVET EUROPÉEN**

(45) Date de publication du fascicule du brevet :
04.05.88

(51) Int. Cl.⁴ : **F 16 L   3/14**

(21) Numéro de dépôt : **84870198.3**

(22) Date de dépôt : **27.12.84**

(54) **Dispositif de suspension.**

(30) Priorité : **14.05.84 LU 85357**

(43) Date de publication de la demande :
**27.12.85 Bulletin 85/52**

(45) Mention de la délivrance du brevet :
**04.05.88 Bulletin 88/18**

(84) Etats contractants désignés :
**AT BE CH DE FR GB IT LI LU NL SE**

(56) Documents cités :
**EP-A- 0 024 050**
**BE-A-   897 512**
**DE-A- 3 204 023**
**US-A- 1 642 131**

(73) Titulaire : **Vrijhof, Jan**
**Lijsterstraat 12**
**B-3760 Lanaken (BE)**

(72) Inventeur : **Vrijhof, Jan**
**Lijsterstraat 12**
**B-3760 Lanaken (BE)**

(74) Mandataire : **van Malderen, Michel et al**
**p.a. FREYLINGER & ASSOCIES 85/042 Boulevard de**
**la Sauvenière**
**B-4000 Liège (BE)**

EP 0 165 370 B1

## Description

La présente invention concerne un nouveau dispositif de suspension, plus particulièrement destiné aux tuyaux à circulation de fluides, comme des tuyaux de chauffage, des tuyaux d'eau, de décharges, de conditionnement d'air... etc.

On connaît plusieurs genres de dispositifs de suspension de tuyaux ayant la forme d'un collier. Ces dispositifs doivent généralement être réglables en hauteur afin de pouvoir assurer une certaine pente d'écoulement de l'installation de tuyauterie et pour compenser certaines différences de niveau dans la construction. Dans le cas de l'utilisation de ces dispositifs pour les tuyaux de chauffage notamment, ils doivent également présenter une certaine mobilité permettant de reprendre les déformations dues à la dilatation thermique.

Ainsi, on trouve sur le marché des colliers en bandes crantées ou perforées permettant un réglage en hauteur et assurant une légère mobilité de la suspension.

Il existe également des colliers fixés à une tige filetée par l'intermédiaire d'un logement à billes assurant la mobilité, le réglage en hauteur pouvant être effectué au moyen d'un écrou correspondant à la tige filetée.

Par les documents DE-A-3 204 023 et US-A-1 642 131, on connaît un dispositif de suspension ou analogue comportant un étrier de fixation en forme de bande et ouvert vers le bout dont les deux extrémités libres repliées sont fixées à une tige filetée par un écrou muni d'un évidement dans lequel s'engagent les extrémités de l'étrier, une douille de sécurité recouvrant les extrémités de l'étrier engagées dans l'écrou de manière à verrouiller l'assemblage.

Par le document BE-A-897 512, on connaît un dispositif de suspension analogue aux précédents, dans lequel le collier qui épouse globalement la forme du tuyau à suspendre est assemblé avec l'écrou au moyen d'ergots qui s'engagent dans des perçages adéquats du collier. Ces dispositifs ne permettent que difficilement un réglage en hauteur du tuyau, une fois que celui-ci est suspendu. D'autre part, ces dispositifs ne permettent pas de suspendre le tuyau de manière rigide ou de régler le serrage du tuyau dans son étrier.

Tous ces dispositifs connus présentent l'inconvénient d'être relativement coûteux, étant donné qu'ils se composent généralement de plusieurs éléments de forme compliquée, et difficiles à mettre en oeuvre.

Par ailleurs, ces dispositifs ne conviennent que rarement pour fixer également des tuyaux d'eau de manière stable, de sorte que ceux-ci soient fixes lors des chocs dus aux ondes de pression.

De plus, l'opérateur doit transporter avec lui une série d'éléments différents qu'il s'agit d'assembler sur le chantier, ce qui rend une installation de tuyauterie encore plus onéreuse. En outre, chaque dimension de tuyauterie exige des dispositifs de suspension adéquats.

Le but de la présente invention vise à fournir un nouveau dispositif de suspension de tuyaux, d'une conception plus simple, et étant, par conséquent, moins coûteux.

Par ailleurs, l'invention vise à fournir un dispositif de suspension qui permet de fixer les tuyauteries de manière stable ou avec une certaine mobilité, soit pour reprendre les sollicitations dûes aux ondes de pression, soit pour permettre un glissement de la tuyauterie dû à la dilatation thermique.

Un autre but de la présente invention vise à fournir un dispositif de suspension qui simplifie les manipulations de l'opérateur, lors du montage dudit dispositif.

Finalement, on cherche également à fournir un dispositif de suspension qui s'adapte à diverses dimensions de tuyauteries, de telle sorte que l'opérateur ne doive pas transporter avec lui une série de dispositifs différents pour chaque tuyauterie, mais un seul dispositif qui s'adapte aux diverses dimensions.

Les buts visés par la présente invention sont atteints par un dispositif de suspension comportant un élément tubulaire dont une extrémité est ouverte et dont l'extrémité opposée comporte une ouverture de passage pour une tige filetée substantiellement concentrique qui porte, à une extrémité, un élément de guidage associé à un écrou et engagé dans les deux extrémités d'une fine bande de manière à former un collier caractérisé en ce que ledit élément tubulaire est muni d'au moins une fente de guidage substantiellement longitudinale dans laquelle coulisse ledit élément de guidage muni d'au moins une patte de guidage correspondante et en ce que ledit dispositif de suspension comporte un deuxième écrou monté sur ladite tige filetée, à l'extérieur de l'élément tubulaire du côté présentant l'ouverture de passage de ladite tige filetée, permettant lors de son serrage contre ledit élément tubulaire, de faire glisser, dans la fente longitudinale de celui-ci, ledit élément de guidage qui entraîne la bande à l'intérieur dudit élément tubulaire par l'extrémité ouverte de celui-ci pour la tendre et/ou la serrer autour du tuyau à suspendre ou analogue à suspendre.

On constate aisément que l'on peut, sans difficulté, réaliser un montage coulissant tenant compte des dilatations thermiques ainsi qu'un montage simple permettant de résister aux chocs de pression, par exemple dans le cas de conduites d'eau, en serrant la bande, de préférence une bande en acier, plus ou moins fort autour du tuyau.

Selon une forme d'exécution particulièrement préférée, l'élément tubulaire comporte deux fentes de guidage parallèles et opposées. L'écrou est avantageusement solidaire de l'élément de guidage coulissant dans lesdites deux fentes de guidage opposées au moyen de deux pattes de guidage dont chacune est adaptée à la fente de guidage correspondante.

Selon une première variante du dispositif de suspension de la présente invention, les deux extrémités libres de la bande qui forme le collier sont engagées sur deux côtés opposés dudit élément de guidage, de préférence ceux qui comportent les pattes de guidage.

Selon une autre variante d'exécution, les deux extrémités libres de la bande qui forme le collier sont engagées sur une même patte de guidage de l'élément de guidage.

Selon une autre variante encore, les deux extrémités libres d'une première bande qui forme un premier collier sont engagées sur un premier côté dudit élément de guidage et les deux extrémités libres d'une deuxième bande qui forme un deuxième collier sont engagées sur un deuxième côté dudit élément de guidage de préférence un côté opposé au premier côté. De cette manière, on peut suspendre deux tuyaux ou analogue sensiblement parallèles par un seul dispositif de suspension, en utilisant simplement deux bandes qui sont tendues simultanément par le serrage dudit deuxième écrou.

Avantageusement, la tige filetée est fixée de manière connue en soi au plafond ou à un mur vertical.

Selon une forme d'exécution avantageuse, la tige filetée est montée de manière angulairement mobile sur un étrier affectant globalement la forme d'un U dont les montants sont munis de pattes tournées vers l'extérieur, ledit étrier pouvant coulisser dans un rail en U renversé dont les montants sont munis de pattes tournées vers l'intérieur, ledit étrier étant calé dans ledit rail par une vis qui permet d'écarter les montants de l'étrier et de les caler contre les pattes intérieures du rail. Avantageusement, les montants de l'étrier comportent des entailles opposées sur les montants de l'étrier, qui permettent l'introduction de l'étrier dans le rail par simple rotation dudit étrier autour de son axe central.

On constate que le dispositif de la présente invention est simple au point de vue de sa fabrication ainsi qu'au point de vue de son montage. De même, les opérations d'assemblage du dispositif sont très simples : en premier lieu, l'opérateur monte la tige filetée au plafond et glisse l'élément tubulaire sur celle-ci à buter contre ledit deuxième écrou ; ensuite, il plie légèrement une fine bande autour du tuyau à suspendre et réunit les deux extrémités de celle-ci par ledit élément de guidage associé à un premier écrou dans lequel il a introduit la tige filetée ; il rabat l'élément tubulaire de manière à introduire les pattes de guidage dudit élément de guidage dans les fentes de guidage et il serre ledit deuxième écrou contre l'élément tubulaire.

On constate également que le dispositif de suspension suivant l'invention peut être adapté à plusieurs dimensions des tuyaux à suspendre et qu'il suffit, pour ce faire, de choisir un élément tubulaire suffisamment long qui permet de recevoir les extrémités de la bande tournée autour du tuyau. Ainsi, l'opérateur n'a pas besoin de se charger des divers dispositifs adaptés aux diverses dimensions de tuyaux, mais il suffit qu'il emporte avec lui une dimension du dispositif de suspension suivant l'invention convenant pour plusieurs dimensions de tuyaux, par exemple les plus courantes.

On constate également que l'opérateur n'a pas à assembler de nombreuses pièces sur chantier, ce qui facilite son travail, en particulier lorsque l'utilisateur se trouve sur une échelle ou un échafaudage par exemple, et réduit le temps de travail.

D'autres détails et avantages de la présente invention apparaîtront plus clairement dans la description qui suit de formes d'exécution préférées, à l'appui des figures annexées dans lesquelles :
- la figure 1 représente le dispositif de suspension selon l'invention suivant une vue en coupe ;
- les figures 2 à 4 représentent des bandes destinées à suspendre un tube au moyen du dispositif de l'invention ;
- les figures 5 à 7 représentent ledit élément de guidage, la figure 5 étant une vue en coupe ;
- la figure 8 représente un élément d'obturation du guide tubulaire ;
- la figure 9 représente une autre forme d'exécution du dispositif selon la présente invention ;
- la figure 10 représente la forme poinçonnée à plier en vue d'obtenir l'élément tubulaire ;
- la figure 11 représente un dispositif supplémentaire pour la fixation de la tige filetée du dispositif de suspension ; et
- la figure 12 représente une vue latérale de l'étrier de la figure 11.

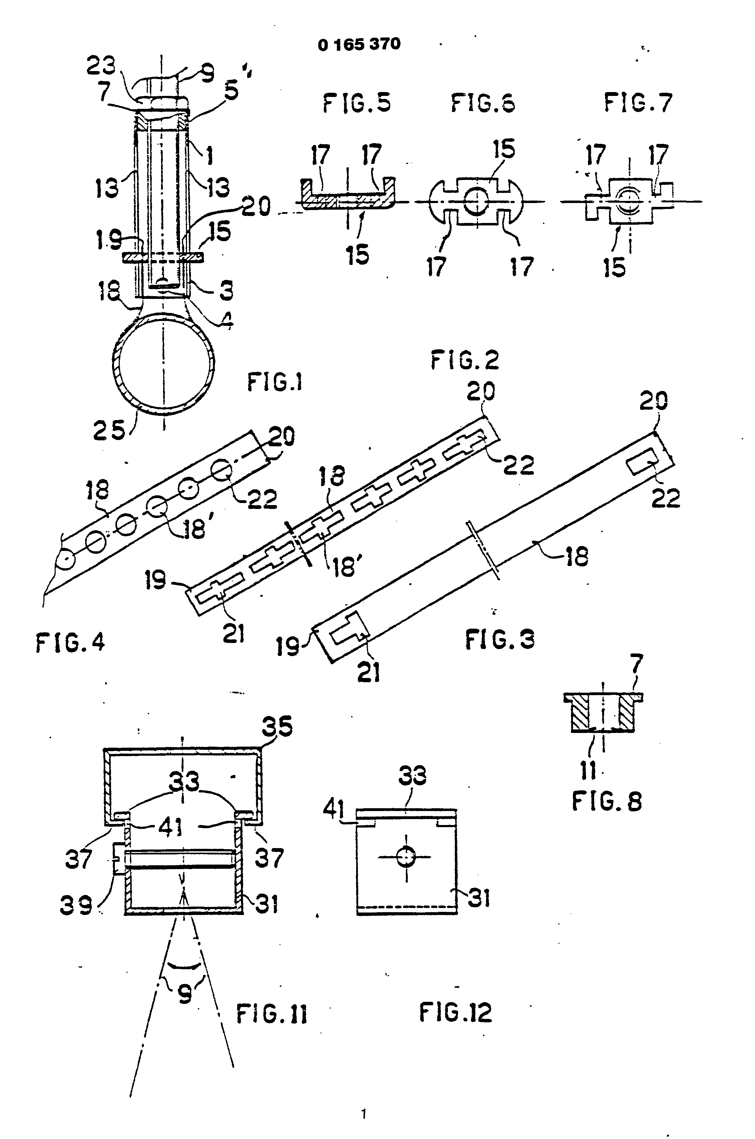

Suivant l'invention, le dispositif de suspension comporte un élément tubulaire 1 de section carrée dont une extrémité est ouverte et dont l'extrémité opposée est obturée par un bouchon 7. En référence à la figure 8, ledit bouchon 7 peut avantageusement consister en un bouchon en matière plastique adapté à l'extrémité de l'élément tubulaire et traversé par une ouverture adaptée au diamètre de la tige filetée, l'ouverture étant avantageusement munie d'une lèvre 11 qui permet un certain accrochage de l'élément tubulaire sur la tige filetée lors de l'assemblage du dispositif de suspension selon la présente invention.

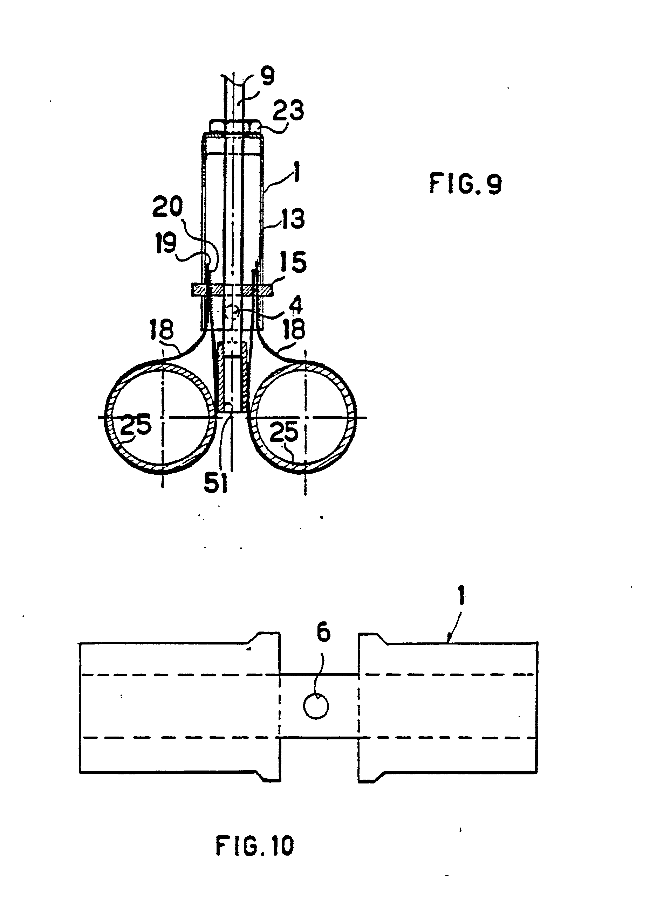

En variante, l'élément tubulaire 1 peut être fabriqué à partir d'une tôle découpée selon la forme de la figure 10 et pliée selon les traits interrompus de manière à obtenir un élément tubulaire 1 ouvert à une extrémité et présentant, à l'extrémité opposée une ouverture de passage 6 pour la tige filetée.

Ledit élément tubulaire 1 est également muni de deux fentes de guidage substantiellement longitudinales opposées 13 dans lesquelles coulisse un élément de guidage 15 associé à un premier écrou, qui est muni de deux pattes de guidage correspondantes 17.

Avantageusement, l'élément de guidage 15 et ledit premier écrou forment une seule pièce, comme représenté dans les figures 5 à 7. Il peut néanmoins être intéressant d'utiliser un écrou séparé de l'élément de guidage, lorsque pour des raisons d'encombrement, il s'agit de suspendre un tuyau au plafond par exemple (voir plus loin).

Dans les figures 5 à 7, on a représenté diverses formes de pattes de guidage 17 qui ne sont toutefois pas limitatives ; on peut également combiner deux pattes 17 de types différents sur un même élément de guidage ou prévoir des pattes de guidage en forme de crochet, ledit crochet sortant du plan du dessin (Fig. 5).

Les pattes de guidage 17 de l'élément 15 sont engagées dans les deux extrémités (19, 20) de la fine bande qui forme un collier autour du tuyau à suspendre (figures 2 à 4). Les deux extrémités (19 et 20) de la bande présentent avantageusement des découpes rectangulaires, rondes, en forme de T ou en forme de croix (21 et 22) qui sont adaptées aux pattes 17 de l'élément de guidage 15. On peut également combiner différentes découpes sur une même bande 18.

La bande 18 peut avantageusement être perforée à distance régulière de trous en forme de T chaque fois opposés ou en forme de croix 18'. Ainsi, l'opérateur peut découper une longueur de bande adéquate hors d'une bande produite en grande longueur.

De préférence, on utilise une bande 18 en acier ayant une épaisseur comprise entre 0,5 et 1,5 mm. On peut cependant également utiliser d'autres bandes, notamment des bandes en matière plastique ou des bandes d'acier recouvertes par une matière plastique ou un caoutchouc. L'élément de guidage 15 est avantageusement monté, par l'intermédiaire dudit premier écrou, sur l'extrémité de la tige filetée de manière telle que le serrage d'un deuxième écrou 23 provoque le rapprochement des deux écrous en serrant la bande 18 autour du tuyau 25 à suspendre. L'élément de guidage 15 coulisse ainsi dans les fentes de guidage 13.

Selon une première forme d'exécution représentée à la figure 1, les extrémités de la bande 18 sont chacune accrochées dans une des pattes opposées de l'élément de guidage.

Selon une autre forme d'exécution, les deux extrémités de la bande 18 sont accrochées dans une même patte de guidage 17 de l'élément de guidage 15.

En variante, on peut également assembler deux bandes 18 sur un même élément de guidage 15, comme représenté à la figure 9. Dans ce cas, il peut être avantageux de prévoir un élément d'entraînement qui maintient un écartement des deux tubes suspendus. Celui-ci peut être réalisé par un prolongement adéquat d'au moins un côté de l'élément tubulaire ou par une douille filetée 51 montée sur l'extrémité de la tige filetée 9. Cette douille filetée 51 peut également servir de raccordement pour un dispositif analogue à celui de la figure 9, par l'intermédiaire de la tige filetée. On peut également prévoir une tige filetée 9 qui permet de recevoir un second élément tubulaire pour la suspension de tuyau(x) inférieur(s).

Avantageusement, l'élément tubulaire 1 présente du côté ouvert, deux trous opposés 4 dont les centres se trouvent sur un axe sensiblement perpendiculaire au plan qui contient les axes de symétrie des deux fentes de guidage 13. En effet, un serrage important de la bande 18 autour du tuyau 25 peut provoquer une déformation de celle-ci, à l'intérieur de l'élément tubulaire, qui empêche un libre déplacement rotatif de la tige filetée 9. On peut donc placer par exemple un tournevis dans ces trous 4 qui permet un écoulement adéquat de la bande 18. En outre, selon le choix des matériaux utilisés, il peut être utile d'empêcher la déformation de l'élément tubulaire, en passant dans les deux trous 4 un boulon serré par un écrou.

Les différentes étapes pour le montage du dispositif de suspension sont les suivantes : on fixe, en premier lieu, la tige filetée 9 au plafond ou au mur ; on y introduit ensuite l'écrou 23 et puis l'élément de guidage tubulaire 1 qui s'accrochera à la tige filetée 9 grâce aux lèvres 11 du bouchon 7 ; on introduit l'écrou 15 sur la tige filetée ; on plie la (les) bande(s) 18 autour du (des) tuyau(x) à suspendre et on accroche les extrémités 19 et 20 de celle(s)-ci dans les pattes de guidage 17 dudit écrou 15 et on rabat l'élément tubulaire 1 de telle sorte que les pattes de guidage 17 entrent dans les fentes de guidage 13 de celui-ci et, ensuite, on serre l'écrou 23 de manière à le rapprocher de l'écrou 15. On constate que la bande 18 « s'écoule » dans l'élément de guidage tubulaire mais que l'écrou 15 ne s'écarte pas du plafond. On constate également que selon la longueur choisie de l'élément de guidage tubulaire 1, on peut utiliser une même bande 18 pour différentes dimensions de tubes à suspendre 25. Il suffit pour ce faire d'introduire l'écrou 15 plus ou moins loin de la tige filetée 9. A titre d'exemple, avec un boîtier ayant une longueur de 55 mm, et une bande de longueur correspondante, on peut suspendre des tuyaux ayant un diamètre de 15 mm, de 22 mm, de 28 mm, de 35 mm et de 42 mm.

Le dispositif selon la présente invention est particulièrement facile à manipuler et convient, pour de nombreux montages à des endroits difficilement accessibles.

Particulièrement, lorsque l'élément de guidage 15 n'est pas solidaire du premier écrou, le dispositif convient bien pour le montage de tubes ou analogue très proches du plafond. On peut alors soulever le tube de sorte que son poids n'appuie plus sur ledit premier écrou par l'intermédiaire de l'élément de guidage 15 et que lors de la fixation de la tige filetée au plafond, la rotation de celle-ci n'entraîne pas la rotation dudit premier écrou ; par conséquent, le réglage de départ est maintenu.

D'autre part, en cas d'encombrement, il peut être avantageux d'accrocher les deux extrémités de la bande 18 sur une seule patte 17. Un avantage non négligeable de la présente invention consiste en ce que, même dans ce cas, le tube suspendu est centré par rapport à la tige filetée 9, lors du serrage du deuxième écrou, puisque la force de serrage est centrale.

Il faut également noter que, bien que le réglage en hauteur soit réglé de manière approximative par l'extrémité de la tige filetée 9, on peut néanmoins procéder à un réglage fin en introduisant l'écrou 15 plus ou moins loin sur la tige filetée 9.

Il est bien entendu que l'élément de guidage 1 peut s'adapter à différents diamètres de tiges filetées. De même, on peut prévoir une fixation directe au plafond ou au mur ainsi qu'une fixation indirecte par l'intermédiaire du dispositif décrit ci-après et représenté aux figures 11 et 12.

Il faut remarquer que l'on peut réaliser un montage stable ou mobile en serrant plus ou moins fort la bande 18 autour du tuyau 25. Néanmoins, la mobilité de la suspension peut encore être améliorée par le choix d'une fixation adéquate de la tige filetée dans le plafond ou dans le mur, tel que par exemple le dispositif décrit ci-après et représenté à la figure 11 où la tige filetée 9 est suspendue de manière pendulaire.

En référence aux figures 10 et 11, le dispositif de fixation se compose d'un étrier 31 affectant globalement la forme d'un U dont les montants sont munis de pattes 33 tournées vers l'extérieur, ledit étrier 31 pouvant coulisser dans un rail en U renversé 35 dont les montants sont munis de pattes 37 tournées vers l'intérieur. L'étrier peut avantageusement être calé dans ledit rail par une vis 39 qui écarte les montants de l'étrier 31 et les cale contre les pattes intérieures 37 du rail 35. Avantageusement, l'étrier présente des entailles opposées 41 disposées sur les montants de celui-ci et situées directement en dessous des pattes 33 tournées vers l'extérieur.

Remarquons encore que l'extrémité de la tige filetée 9, qui est proche du tuyau à suspendre est un point absolument fixe en hauteur et que ce n'est que l'écrou 23 qui se déplace sur ladite tige filetée 9. Par conséquent, on peut donc, lors du montage, régler approximativement la hauteur de la tuyauterie à suspendre, ainsi que les pentes d'inclinaison.

## Revendications

1. Dispositif de suspension comportant un élément tubulaire (1) dont une extrémité (3) est ouverte et dont l'extrémité opposée (5) comporte une ouverture de passage pour une tige filetée substantiellement concentrique qui porte, à une extrémité, un élément de guidage (15) associé à un écrou et engagé dans les deux extrémités d'une fine bande (18) de manière à former un collier, caractérisé en ce que ledit élément tubulaire (1) est muni d'au moins une fente de guidage (13) substantiellement longitudinale dans laquelle coulisse ledit élément de guidage (15) muni d'au moins une patte de guidage (17) correspondante et en ce que ledit dispositif de suspension comporte un deuxième écrou (23) monté sur ladite tige filetée (9) à l'extérieur de l'élément tubulaire (1) du côté présentant l'ouverture de passage de ladite tige filetée, permettant lors de son serrage contre ledit élément tubulaire (1), de faire glisser, dans la fente longitudinale (13) de celui-ci, ledit élément de guidage (15) qui entraîne la bande à l'intérieur dudit élément tubulaire (1) par l'extrémité ouverte de celui-ci pour la tendre et/ou la serrer autour du tuyau à suspendre ou analogue à suspendre (25).

2. Dispositif de suspension selon la revendication 1 caractérisé en ce que l'élément tubulaire (1) est de section carrée et en ce qu'il comporte deux fentes de guidage (13) longitudinales opposées et en ce que l'élément de guidage (15) comporte deux pattes de guidage (17) opposées.

3. Dispositif de suspension selon la revendication 2 caractérisé en ce que l'élément tubulaire (1) comporte, du côté ouvert (3), deux trous opposés (4) dont les centres se trouvent sur un axe perpendiculaire au plan qui contient les deux axes de symétrie des deux fentes de guidage (13).

4. Dispositif selon l'une quelconque des revendications 1 ou 2 caractérisé en ce que l'élément tubulaire (1) comporte à son extrémité opposée à l'extrémité ouverte (3) un bouchon en matière plastique traversé par une ouverture qui présente une lèvre (11) qui peut s'accrocher dans la tige filetée (9).

5. Dispositif de suspension selon l'une quelconque des revendications 1 à 3 caractérisé en ce que l'élément tubulaire (1) est fabriqué par pliage d'une tôle comportant dans son centre une ouverture de passage (6) pour la tige filetée (9).

6. Dispositif selon l'une quelconque des revendications précédentes caractérisé en ce que la bande (18) comporte au moins aux deux extrémités une perforation ronde, rectangulaire, en forme de croix ou en forme de T opposés, adaptés aux pattes de guidage (17) de l'élément de guidage (15).

7. Dispositif selon l'une quelconque des revendications précédentes caractérisé en ce que la bande (18) consiste en une bande en matière synthétique ou en une bande métallique, de préférence en acier galvanisé ou revêtu d'une matière synthétique, ayant une épaisseur comprise entre 0,5 et 1,5 mm.

8. Dispositif suivant l'une quelconque des revendications précédentes caractérisé en ce que les deux extrémités libres (19, 20) de la bande (18) qui forme le collier sont engagées sur les deux côtés opposés dudit élément de guidage (15).

9. Dispositif suivant l'une quelconque des revendications 1 à 7 caractérisé en ce que les deux extrémités libres (19, 20) de la bande qui forme le collier sont engagées sur une même patte de guidage (17) de l'élément de guidage (15).

10. Dispositif suivant l'une quelconque des revendications 1 à 7 caractérisé en ce que les deux extrémités libres (19, 20) d'une première bande qui forme un premier collier sont engagées sur une première patte (17) de l'élément de guidage (15) et en ce que les deux extrémités libres (19, 20) d'une deuxième bande qui forme un deuxième collier sont engagées sur la deuxième patte (17) de l'élément de guidage (15), opposée à la première.

11. Dispositif suivant la revendication 10 caractérisé en ce que les deux tubes ou analogue suspendus sont écartés par un élément d'entretoisement (5) solidaire de la tige filetée (9) ou solidaire de l'élément tubulaire (1).

12. Dispositif suivant la revendication 11 caractérisé en ce que l'élément d'entretoisement (51) solidaire de la tige filetée (2) permet le raccordement d'un second dispositif de suspension.

13. Dispositif suivant l'une quelconque des revendications précédentes caractérisé en ce que la tige filetée (9) est montée de manière angulairement mobile sur un étrier (31) affectant globalement la forme d'un U dont les montants sont munis de pattes (33) tournées vers l'extérieur, ledit étrier (31) pouvant coulisser dans un rail en U renversé (35) dont les montants sont munis de pattes (37) tournées vers l'intérieur, ledit étrier (31) étant calé dans ledit rail (35) par une vis (39) qui permet d'écarter les montants de l'étrier (31) et de les caler contre les pattes intérieures (37) du rail (35).

14. Dispositif selon la revendication précédente caractérisé en ce que les montants de l'étrier (31) comportent, directement en-dessous des pattes extérieures (33) des entailles (41) opposées.

**Claims**

1. A suspension device comprising a tubular element (1) of which one end (3) is open, while the opposite end (5) has an opening for the passage of a substantially concentric threaded rod, which bears at one end a guide member (15) associated with a nut and being engaged in the two ends of a thin band (18) in such a manner as to form a collar characterized in that said tubular element (1) is provided with at least one substantially longitudinal guide slot (13) in which slides said guide member (15) provided with at least one corresponding guide lug (17) and in that said suspension device comprises a second nut (23) mounted on the threaded rod (9), outside the tubular element (1) on the side where the opening for the passage of the threaded rod is provided, making it possible, when it is tightened against the tubular element (1), to cause said guide member (15) to slide in the longitudinal slot (13) in the latter, and said guide member carrying with it the band inside said tubular element (1), through the open end of the latter, in order to tension it and/or tighten it around the pipe (25) or the like which is to be suspended.

2. A suspension device as claimed in Claim 1, characterized in that the tubular element (1) has a square section and is provided with two oppositely situated longitudinal guide slots (13), and in that the guide member (15) has two oppositely situated guide lugs (17).

3. A suspension device as claimed in Claim 2 characterized in that the tubular element (1) is provided, on the open side (3), with two oppositely situated holes (4) whose centers are located on an axis perpendicular to the plane containing the two axes of symmetry of the two guide slots (13).

4. A device as claimed in any one of Claims 1 or 2, characterized in that the tubular element (1) is provided, at its end opposite the open end (3), with a stopper of plastic material pierced with an opening having a lip (11) adapted to be secured on the threaded rod (9).

5. A suspension device as claimed in any of Claims 1 to 3, characterized in that the tubular element (1) is produced by folding a metal sheet having in its center an opening (6) for the passage of the threaded rod (9).

6. A device as claimed in any one of the preceding claims, characterized in that the band (18) has, at least at its two end, a round, rectangular, or cross-shaped perforation or perforations in the form of oppositely arranged T's, matching the guide lugs (17) of the guide member (15).

7. A device as claimed in any one of the preceding claims, characterized in that the band (18) consists of a band of synthetic material or of a metallic band, preferably of galvanized steel or steel coated with a synthetic material, and has a thickness between 0.5 and 1.5 mm.

8. A device as claimed in any one of the preceding claims, characterized in that two free ends (19, 20) of the band (18) forming the collar are engaged on the two opposite sides of the guide member (15).

9. A device as claimed in any one of Claims 1 to 7, characterized in that the two free ends (19, 20) of the band forming the collar are engaged on the same guide lug (17) of the guide member (15).

10. A device as claimed in any one of Claims 1 to 7, characterized in that the two free ends (19, 20) of a first band forming a first collar are engaged on a first lug (17) of the guide element (15), and in that the two free ends (19, 20) of a second band forming a second collar are engaged on the second lug (17), opposite the first lug, of the guide member (15).

11. A device as claimed in Claim 10, characterized in that the two pipes or the like which are to be suspended are spaced apart by a spacing member (51) fastened to the threaded rod (9) or to the tubular element (1).

12. A device as claimed in Claim 11, characterized in that the spacing member (51) fastened to the threaded rod (2) permits the connection of a second suspension device.

13. A device as claimed in any one of the preceding claims, characterized in tnat the threaded rod (9) is mounted for angular movability on a yoke (31) having the general shape of a U whose uprights are provided with outwardly directed lugs (33) and which is adapted to slide in an inverted Ushaped rail (35) whose uprights are provided with inwardly directed lugs (37), said yoke (31) being fastened in said rail (35) by a screw (39) enabling the uprights of the yoke (31) to be moved apart and to be wedged against the internal lugs (37) of the rail (35).

14. A device as claimed in the preceding Claim, characterized in that the uprights of the yoke (31) are provided, directly beneath the external lugs (33), with oppositely situated notches (41).

**Patentansprüche**

1. Aufhängevorrichtung die ein Röhrenelement (1) aufweist, dessen eines Ende offen ist und dessen entgegengesetztes Ende (5) eine Durchgangsöffnung für eine im wesentlichen konzentrische Gewindestange hat, die an einem Ende ein Führungselement (15) trägt, das mit einer Schraubenmutter verbunden ist und in die beiden Enden eines dünnen Bandes (18) unter Bildung einer Schelle eingreift, dadurch gekennzeichnet, dass das Röhrenelement (1) mit wenigstens einem im wesentlichen längs ausgerichteten Führungsschlitz (13) versehen ist, in welchem das Führungselement (15) gleitbar vorgesehen ist, das mit wenigstens einer entsprechenden Führungsklaue (17) versehen ist, und dass eine zweite Schraubenmutter (23) auf der Gewindestange (9) auf der Außenseite des Röhrenelementes (1) auf der Seite, die die Durchgangsöffnung für die Gewindestange aufweist, befestigt ist, so daß nach ihrem Anziehen gegen das Röhrenelement (1), das Führungselement (15) in dem längs ausgerichteten Führungsschlitz (13) gleitet, wobei das Band (18) durch das Führungselement (15) durch das offene Ende (weiter) in das Innere des Röhrenelementes (1) hineingezogen und so um das aufzuhängende Rohr oder dergleichen (25) herumgespannt und/oder festgezogen ist.

2. Aufhängevorrichtung nach Anspruch 1, dadurch gekennzeichnet, daß das Röhrenelement (1) viereckigen Querschnitt hat, daß es zwei einander gegenüberliegende längsgerichtete Führungsschlitze (13) hat und daß das Führungselement (15) zwei einander gegenüberliegende Führungsklauen (17) aufweist.

3. Aufhängevorrichtung nach Anspruch 2, dadurch gekennzeichnet, daß das Röhrenelement (1) auf der offenen Seite (3) zwei einander gegenüberliegende Löcher (4) besitzt, deren Mittelpunkte sich auf einer Achse senkrecht zur Ebene, die die beiden Symmetrieachsen der beiden Führungsschlitze (13) enthält, befinden.

4. Vorrichtung nach einem der Ansprüche 1 oder 2, dadurch gekennzeichnet, daß das Röhrenelement (1) an seinem dem offenen Ende (3) gegenüberliegenden Ende einen Stopfen aus Kunststoffmaterial aufweist, der von einer Öffnung durchdrungen ist, die eine mit der Gewindestange (9) verhakbare Lippe (11) besitzt.

5. Aufhängevorrichtung nach einem der Ansprüche 1 bis 3, dadurch gekennzeichnet, daß das Röhrenelement (1) durch Falten eines Bleches hergestellt ist, das in seiner Mitte eine Durchgangsöffnung (6) für die Gewindestange (9) hat.

6. Vorrichtung nach einem der vorausgehenden Ansprüche, dadurch gekennzeichnet, daß das Band (18) an beiden Enden wenigstens eine runde, rechteckige, kreuzförmige oder gegenüberliegende T-förmige Durchlochung besitzt, die an die Führungsklauen (17) des Führungselementes (15) angepaßt ist.

7. Vorrichtung nach einem der vorausgehenden Ansprüche, dadurch gekennzeichnet, daß das Band (18) aus einem Band aus Kunststoffmaterial oder einem Metallband, vorzugsweise aus galvanisiertem oder aus mit einem Kunststoffmaterial überzogenem Stahl, besteht und eine Dicke zwischen 0,5 und 1,5 mm hat.

8. Vorrichtung nach einem der vorausgehenden Ansprüche, dadurch gekennzeichnet, daß die beiden freien Enden (19, 20) des Bandes (18), das die Schelle bildet, in Eingriff mit den beiden einander gegenüberliegenden Seiten des Führungselementes (15) stehen.

9. Vorrichtung nach einem der Ansprüche 1 bis 7, dadurch gekennzeichnet, daß die beiden freien Enden (19, 20) des Bandes, das die Schelle bildet, in Eingriff mit derselben Führungsklaue (17) des Führungselementes (15) stehen.

10. Vorrichtung nach einem der Ansprüche 1 bis 7, dadurch gekennzeichnet, daß die beiden freien Enden (19, 20) eines ersten Bandes, das eine erste Schelle bildet, in Eingriff mit einer ersten Klaue (17) des Führungselementes (15) stehen und daß die beiden freien Enden (19, 20) eines zweiten Bandes, das eine zweite Schelle bildet, in Eingriff mit der zweiten Klaue (17) des Führungselementes (15), die der ersten Klaue gegenüberliegt, stehen.

11. Vorrichtung nach Anspruch 10, dadurch gekennzeichnet, daß die beiden aufgehängten Rohre oder dergleichen durch ein Abstandshalterelement (51), das mit der Gewindestange (9) oder mit dem Röhrenelement (1) formschlüssig ist, voneinander getrennt sind.

12. Vorrichtung nach Anspruch 11, dadurch gekennzeichnet, daß das Abstandshalterelement (51) für die Anfügung einer zweiten Aufhängevorrichtung mit der Gewindestange (9) formschlüssig ist.

13. Vorrichtung nach einem der vorausgehenden Ansprüche, dadurch gekennzeichnet, daß die Gewindestange (9) winkelförmig beweglich an einem in einer umgekehrten U-Schiene (35) gleitfähigen Spannbügel (31) befestigt ist, der insgesamt die Form eines U hat, dessen Schenkel mit nach außen gebogenen Klauen (33) versehen sind, wobei die Schenkel der U-Schiene (35) mit nach innen gebogenen Klauen (37) versehen sind und der Spannbügel (31) zum Aufspreizen der Schenkel des Spannbügels (31) und Festklemmen derselben gegen die inneren Klauen (37) der Schiene (35) in der Schiene (35) mit einer Schraube (39) festgeklemmt ist.

14. Vorrichtung nach den vorausgehenden Anspruch, dadurch gekennzeichnet, daß die Schenkel des Spannbügels (31) direkt unterhalb der äußeren Klauen (33) einander gegenüberliegende Einschnitte (41) haben.

0 165 370

FIG.5  FIG.6  FIG.7

FIG.1

FIG.2

FIG.4

FIG.3

FIG.8

FIG.11  FIG.12

1

FIG.9

FIG.10